# FASCICULE DE BREVET EUROPEEN

(11) **EP 4 164 394 B1**
(45) Date de publication et mention de la délivrance du brevet: **10.07.2024**
(21) Numéro de dépôt: 21727132.9
(22) Date de dépôt: 19.05.2021
(51) Int. Cl.: A22C 11/12, A22C 11/10

(54) **DISPOSITIF DE FABRICATION DE SAUCISSES**
VORRICHTUNG ZUR HERSTELLUNG VON WÜRSTEN
DEVICE FOR THE PRODUCTION OF SAUSAGES

(30) Priorité: 16.06.2020 FR 2006289
(43) Date de publication de la demande: 19.04.2023
(73) Titulaire: CJ-MT, 67450 Mundolsheim (FR)
(72) Inventeur: BUHLMANN, Jean-Marc, 67450 Mundolsheim (FR)
(74) Mandataire: Cabinet Bleger-Rhein-Poupon
(86) Numéro de dépôt international: PCT/EP2021/063227
(87) Numéro de publication internationale: WO 2021/254712

(56) Documents cités:
- EP-A1- 3 241 447
- EP-A2- 2 335 486
- WO-A2-02/45517
- FR-A- 1 454 225
- US-A- 5 087 463

## Description

La présente invention concerne un dispositif de fabrication de saucisses.

L'invention concerne le domaine des machines conçues pour fabriquer des saucisses, plus particulièrement des saucisses qui comportent un boyau contenant un produit alimentaire et refermé à ses deux extrémités, notamment par un clip.

L'on connait, d'ores et déjà, de tels dispositifs de fabrication de saucisses.

Ces dispositifs comportent, usuellement, un tube qui s'étend selon un axe. C'est autour de ce tube qu'est positionné un boyau entrant dans la composition des saucisses, ceci dans l'attente du remplissage de ce boyau par un produit alimentaire. C'est à l'intérieur de ce tube qu'est acheminé le produit alimentaire, ceci pour remplir le boyau. En fait, le produit alimentaire est poussé à l'intérieur du boyau ce qui a pour effet d'entraîner ce boyau qui quitte le tube.

Ces dispositifs comportent, également, au moins un système d'étranglement d'une partie du boyau remplie de produit alimentaire ainsi que des moyens de sertissage d'au moins un clip sur la partie étranglée de ce boyau.

En fait, ce système d'étranglement comporte, d'une part, une partie fixe située en contrebas du tube et, d'autre part, une partie mobile, qui est mobile par rapport à cette partie fixe, et qui est actionnée en direction de cette partie fixe, ceci pour étrangler le boyau en vue du sertissage dudit au moins un clip sur la partie étranglée du boyau.

A ce propos, on observera qu'en vue de procéder à ce sertissage, le boyau contenant du produit alimentaire est entraîné par la partie mobile du système d'étranglement, ceci en direction de la partie fixe de ce système d'étranglement. En procédant à un tel entraînement, la partie mobile du système d'étranglement exerce, sur le boyau, des contraintes importantes qui peuvent conduire à la rupture de ce boyau. Un tel phénomène de rupture se produit pour des boyaux artificiels mais est encore plus fréquent pour des boyaux naturels qui sont plus fragiles que les boyaux artificiels.

La rupture d'un tel boyau impose, alors, un arrêt de la production de saucisses et nécessite un nettoyage consciencieux du dispositif de fabrication, ceci conformément à des règles sanitaires très strictes. Ce nettoyage est long et fastidieux et empêche l'utilisation de ce dispositif de fabrication pendant une durée conséquente. Il en résulte une perte de production significative.

On observera, également, que le dispositif de fabrication comporte, encore, des moyens d'évacuation des saucisses hors de ce dispositif de fabrication. Ces moyens d'évacuation sont situés au-dessus de la partie fixe du système d'étranglement de sorte que, pour évacuer ces saucisses, le dispositif doit comporter un éjecteur qui relève ces saucisses, ceci en vue de les amener au niveau des moyens d'évacuation afin de les évacuer hors du dispositif. Outre le fait qu'un tel éjecteur constitue une pièce supplémentaire, a fortiori mobile, pour le dispositif de fabrication, la rupture d'un boyau (tel que susmentionné) nécessite, alors, également, un nettoyage approprié d'un tel éjecteur qui s'avère, là aussi, long et fastidieux.

Par le document EP 2 335 486 on connait un dispositif pour la fabrication de saucisses qui comportent un boyau contenant un produit alimentaire et refermé à ses deux extrémités. Ce dispositif comporte un support fixe et un moyen de stockage d'un boyau dans l'attente de son remplissage par le produit alimentaire, ce moyen de stockage s'étendant selon un axe et présentant une portion d'extrémité qui délimite un volume d'extrémité. Ce dispositif comporte, encore, un moyen d'acheminement du produit alimentaire en vue du remplissage du boyau avec ce produit alimentaire. Ce dispositif comporte, également, au moins un système d'étranglement d'une partie du boyau remplie de produit alimentaire, ledit au moins un système d'étranglement étant configuré pour étrangler le boyau autour d'un axe qui, d'une part, est au moins parallèle à l'axe selon lequel s'étend le moyen de stockage du boyau et, d'autre part, traverse le volume d'extrémité. Dans ce dispositif, ledit au moins un système d'étranglement comporte au moins, d'une part, un premier bras d'étranglement, qui est monté en rotation sur le support fixe et autour d'un axe parallèle à l'axe selon lequel s'étend le moyen de stockage, qui est mobile entre une position inactive d'étranglement du boyau et une position active d'étranglement du boyau, et qui comporte un premier berceau pour la réception de la partie de boyau à étrangler, d'autre part, un deuxième bras d'étranglement, qui est monté en rotation sur le support fixe et autour d'un axe parallèle à l'axe selon lequel s'étend le moyen de stockage, qui est mobile entre une position inactive d'étranglement du boyau et une position active d'étranglement du boyau, et qui comporte un deuxième berceau pour la réception de la partie de boyau à étrangler.

La présente invention se veut de remédier aux inconvénients des dispositifs de fabrication de saucisses de l'état de la technique
A cet effet, l'invention concerne un dispositif pour la fabrication de saucisses qui comportent un boyau contenant un produit alimentaire et refermé à ses deux extrémités. Ce dispositif comporte, d'une part, un support fixe, d'autre part, un moyen de stockage d'un boyau dans l'attente de son remplissage par le produit alimentaire, ce moyen de stockage s'étendant selon un axe et présentant une portion d'extrémité qui délimite un volume d'extrémité, d'autre part encore, un moyen d'acheminement du produit alimentaire en vue du remplissage du boyau avec ce produit alimentaire et, d'autre part aussi, au moins un système d'étranglement d'une partie du boyau remplie de produit alimentaire. Ledit au moins un système d'étranglement est configuré pour étrangler le boyau autour d'un axe qui, d'une part, est au moins parallèle à l'axe selon lequel s'étend le moyen de stockage du boyau et, d'autre part, traverse le volume d'extrémité. Ledit au moins un système d'étranglement comporte au moins, d'une part, un premier bras d'étranglement, qui est monté en rotation sur le support fixe et autour d'un axe parallèle à l'axe selon lequel s'étend le moyen de stockage, qui est mobile entre une position inactive d'étranglement du boyau et une position active d'étranglement du boyau, et qui comporte un premier berceau pour la réception de la partie de boyau à étrangler, d'autre part, un deuxième bras d'étranglement, qui est monté en rotation sur le support fixe et autour d'un axe parallèle à l'axe selon lequel s'étend le moyen de stockage, qui est mobile entre une position inactive d'étranglement du boyau et une position active d'étranglement du boyau, et qui comporte un deuxième berceau pour la réception de la partie de boyau à étrangler. Ce dispositif est caractérisé par le fait que le premier bras d'étranglement et le deuxième bras d'étranglement comportent des moyens de guidage d'au moins un clip de sertissage, ceci en direction de l'axe autour duquel le boyau est étranglé par ledit au moins un système d'étranglement.

Selon une autre caractéristique, ledit au moins un système d'étranglement comporte, encore, un levier d'étranglement, qui est mobile en rotation autour d'un axe parallèle à l'axe selon lequel s'étend le moyen de stockage, ceci entre une position inactive d'étranglement du boyau et une position active d'étranglement du boyau.

Une caractéristique additionnelle concerne le fait que le dispositif comporte, encore, des moyens d'actionnement pour actionner ledit au moins un système d'étranglement, ces moyens d'actionnement étant configurés pour entraîner le premier bras d'étranglement ou le deuxième bras d'étranglement ou le levier d'étranglement.

En fait, le levier d'étranglement est monté en rotation autour de l'axe sur le premier bras d'étranglement tandis que les moyens d'actionnement sont montés en rotation, d'une part, sur le support fixe, ceci autour d'un axe parallèle à l'axe selon lequel s'étend le moyen de stockage et, d'autre part, sur le levier d'étranglement, ceci autour d'un autre axe parallèle à l'axe selon lequel s'étend le moyen de stockage.

Ainsi, le dispositif de fabrication de saucisses selon l'invention comporte au moins un système d'étranglement qui est configuré pour étrangler le boyau autour d'un axe qui, d'une part, est au moins parallèle à l'axe selon lequel s'étend le moyen de stockage du boyau et, d'autre part, traverse le volume d'extrémité délimité par la portion d'extrémité du moyen de stockage.

Cette caractéristique permet, avantageusement, d'exercer les contraintes d'étranglement du boyau autour d'un axe qui est situé au moins à proximité de (voire confondu avec) l'axe selon lequel s'étend le moyen de stockage de ce boyau, notamment en direction de cet axe, plus particulièrement de manière radiale par rapport à cet axe. Cet axe est situé au moins à proximité de (voire confondu avec) l'axe selon lequel s'étend la portion de boyau remplie de produit alimentaire et qu'il convient d'étrangler, ceci après que ce boyau ait quitté ce moyen de stockage. Cette caractéristique permet, alors, d'exercer ces contraintes d'étranglement autour de l'axe selon lequel s'étend la portion de boyau à étrangler et qui est situé à proximité de (voire confondu avec) l'axe selon lequel s'étend ce boyau lorsqu'il est stocké au sein du moyen de stockage. Ceci permet de réduire considérablement les risques de rupture du boyau du fait d'un tel étranglement par rapport aux dispositifs de l'état de la technique. De plus et étant donné que le risque de rupture est réduit, le dispositif selon l'invention peut, avantageusement, mettre en oeuvre des boyaux artificiels mais également des boyaux naturels qui sont plus fragiles.

Cette caractéristique permet, également, d'éviter d'avoir recours à un éjecteur pour relever les saucisses en vue de leur évacuation hors du dispositif de fabrication. Ceci présente les avantages, d'une part, de simplifier et de fiabiliser ce dispositif de fabrication et, d'autre part, d'éviter le nettoyage d'un tel éjecteur, notamment en cas de rupture de boyau.

Le dispositif de fabrication comporte, encore, un premier bras d'étranglement et un deuxième bras d'étranglement qui sont montés en rotation sur un support, voire encore des moyens d'entraînement de ce deuxième bras par ce premier bras (ou de ce premier bras par ce deuxième bras). Ces caractéristiques permettent, avantageusement, de proposer un dispositif de fabrication avec un système d'étranglement dont les différents éléments présentent une cinématique simple et dont la conception est simple et efficace ce qui confère à ce dispositif un niveau élevé de fiabilité.

Le système d'étranglement peut, également, comporter un levier d'étranglement qui permet, avantageusement, d'optimiser l'étranglement du boyau.

Le dispositif de fabrication comporte des moyens d'actionnement qui agissent sur le premier bras d'étranglement ou sur le deuxième bras d'étranglement ou encore sur le levier d'étranglement. Ce levier d'étranglement peut, alors et en particulier, être monté en rotation sur le premier bras d'étranglement, et, sous l'effet des moyens d'actionnement, entraîner en rotation ce premier bras qui, lui-même, entraîne en rotation le deuxième bras d'étranglement. Ce dispositif de fabrication comporte, donc, des éléments (premier bras d'étranglement, deuxième bras d'étranglement, levier d'étranglement, moyens d'actionnement) qui sont agencés et qui interagissent de manière particulièrement astucieuse et permettent un fonctionnement simple, efficace et fiable du système d'étranglement.

Le premier et le deuxième bras d'étranglement comportent des moyens de guidage d'un clip de sertissage, ceci en direction de l'axe autour duquel le boyau est étranglé par ledit au moins un système d'étranglement. La présence de ces moyens de guidage permet, alors, avantageusement, de sertir un tel clip sur la portion étranglée du boyau qui, tel que mentionné ci-dessus, s'étend selon un axe qui est situé au moins à proximité de (voire confondu avec) l'axe selon lequel s'étend le moyen de stockage du boyau. Cette caractéristique permet, alors, d'exercer des contraintes de sertissage autour de l'axe selon lequel s'étend la portion étranglée du boyau qui est situé à proximité de (voire confondu avec) l'axe selon lequel s'étend ce boyau lorsqu'il est stocké au sein du moyen de stockage. Ceci permet, là encore, de réduire considérablement les risques de rupture du boyau du fait d'un tel sertissage par rapport aux dispositifs de l'état de la technique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

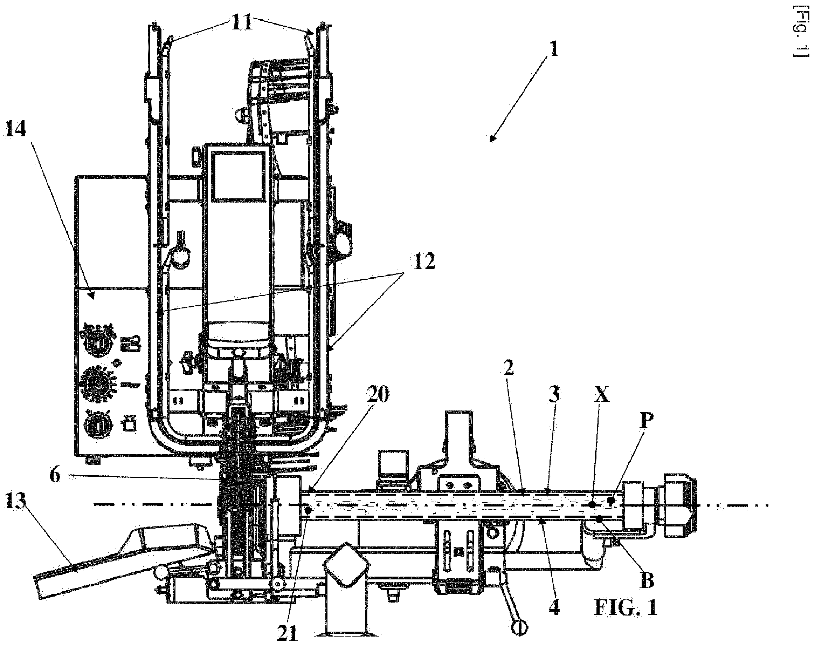

[Fig.1] représente une vue schématisée et de face d'un dispositif de fabrication de saucisses conforme à l'invention.
[Fig.2] représente une vue schématisée, de côté et en détail d'un système d'étranglement que comporte le dispositif de fabrication de saucisses illustré figure 1, ceci en position inactive d'étranglement.
[Fig.3] représente une vue schématisée, de côté et en détail du système d'étranglement illustré figure 2, ceci dans une position intermédiaire entre une position inactive et une position active d'étranglement.
[Fig.4] représente une vue schématisée, de côté et en détail du système d'étranglement illustré figures 2 et 3, ceci dans une position active d'étranglement.
[Fig.5] représente une vue schématisée, en perspective et en détail du système d'étranglement illustré figures 2 à 4, ceci dans une position intermédiaire entre la position inactive et la position active d'étranglement.

La présente invention concerne le domaine de la fabrication des dispositifs conçus pour fabriquer des saucisses, plus particulièrement des saucisses qui comportent un boyau contenant un produit alimentaire (plus particulièrement de la chair à saucisse, de la soupe, de la sauce, notamment de la sauce tomate ou autre) et refermé à ses deux extrémités, notamment par un clip.

L'invention concerne, alors, un tel dispositif pour la fabrication de saucisses 1 qui, pour des raisons de simplification de la présente description, sera dénommé « dispositif 1 » dans la suite de cette description.

Un tel dispositif 1 comporte un moyen de stockage 2 qui est configuré pour stocker un boyau B, ceci dans l'attente de son remplissage par un produit alimentaire P. Au sein de ce moyen de stockage 2, ledit boyau B est stocké sous forme repliée, notamment en accordéon. Selon une caractéristique particulière, ce moyen de stockage 2 s'étend selon un axe X. Selon une autre caractéristique, ce moyen de stockage 2 présente une portion d'extrémité 20 qui délimite un volume d'extrémité 21. C'est, plus particulièrement, au niveau de cette portion d'extrémité 20 (plus particulièrement au niveau d'une extrémité libre que comporte ce moyen de stockage 2 et que comporte cette portion d'extrémité 20) que le boyau B quitte le moyen de stockage 2, ceci en vue d'être rempli par le produit alimentaire P.

Ce dispositif 1 comporte, également, un moyen d'acheminement 3 du produit alimentaire P, ceci en vue du remplissage du boyau B avec ce produit alimentaire P.

A ce propos, on observera que ce dispositif 1 est, usuellement, associé à un poussoir (non représenté) qui est configuré pour alimenter ledit moyen d'acheminement 3 en produit alimentaire P, notamment en poussant ce produit alimentaire P à l'intérieur et au travers de ce moyen d'acheminement 3. L'alimentation dudit moyen d'acheminement 3 en produit alimentaire P par ce poussoir (plus particulièrement au niveau d'une extrémité amont de ce moyen d'acheminement 3) permet, alors, de remplir le boyau B avec du produit alimentaire P (plus particulièrement au niveau d'une extrémité avale de ce moyen d'acheminement 3 et/ou au niveau de la portion d'extrémité 20, voire de l'extrémité libre, du moyen de stockage 2).

Une autre caractéristique concerne le fait que le dispositif 1 comporte, également, un tube 4.

A ce propos, on observera que c'est, plus particulièrement, le moyen de stockage 2 d'un boyau B qui comporte ce tube 4 autour duquel est positionné (plus particulièrement autour duquel est stocké) le boyau B, ceci de la manière décrite ci-dessus (sous forme repliée, notamment en accordéon) et dans l'attente de son remplissage par le produit alimentaire P.

C'est, également, le moyen d'acheminement 3 du produit alimentaire P qui comporte ce tube 4 à l'intérieur duquel est acheminé le produit alimentaire P, ceci en vue du remplissage du boyau B.

Selon une caractéristique particulière, ce tube 4 s'étend selon un axe qui est au moins parallèle à (voire, et de préférence, confondu avec) l'axe X selon lequel s'étend le moyen de stockage 2.

Selon une caractéristique additionnelle, le dispositif 1 comporte un support fixe 5.

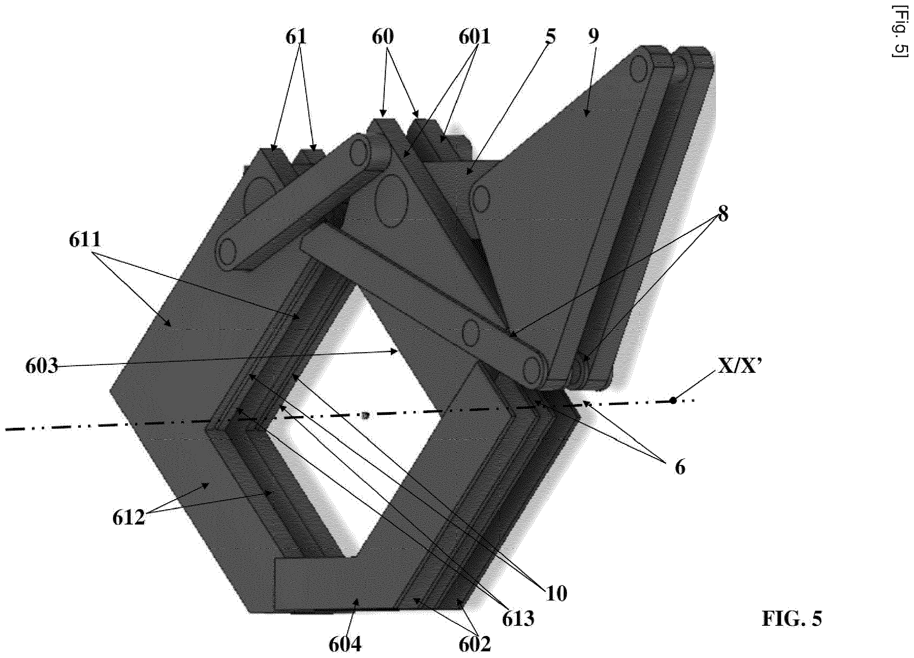

Encore une autre caractéristique concerne le fait que le dispositif 1 comporte au moins un système d'étranglement 6 qui est configuré pour étrangler une partie du boyau B remplie de produit alimentaire P. A ce propos, on observera que, selon un mode de réalisation particulier de l'invention, le dispositif 1 comporte, en fait, deux systèmes d'étranglement 6, ceci tel que visible figure 5.

Selon l'invention, ledit au moins un système d'étranglement 6 est (chacun) configuré pour étrangler le boyau B autour d'un axe X' qui, d'une part, est au moins parallèle à (voire confondu avec) l'axe X selon lequel s'étend le moyen de stockage 2 du boyau B et, d'autre part, traverse le volume d'extrémité 21 délimité par la portion d'extrémité 20 de ce moyen de stockage 2.

A ce propos, on observera que, lorsque le dispositif 1 comporte deux systèmes d'étranglement 6, chacun de ces systèmes d'étranglement 6 est, alors, configuré pour étrangler le boyau B autour d'un axe X' qui, d'une part, est au moins parallèle à (voire confondu avec) l'axe X selon lequel s'étend le moyen de stockage 2 du boyau B et, d'autre part, traverse le volume d'extrémité 21 délimité par la portion d'extrémité 20 de ce moyen de stockage 2.

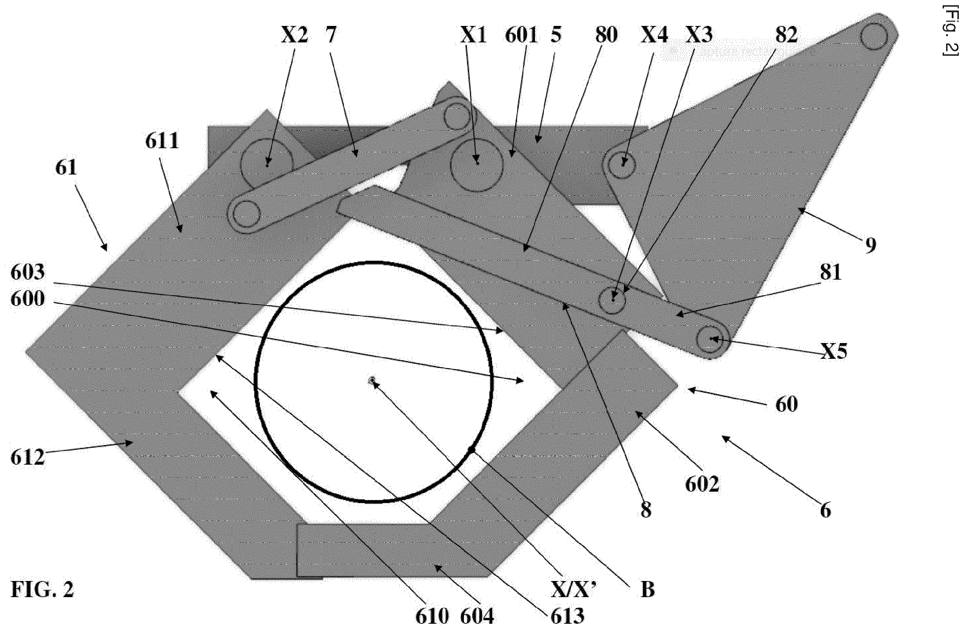

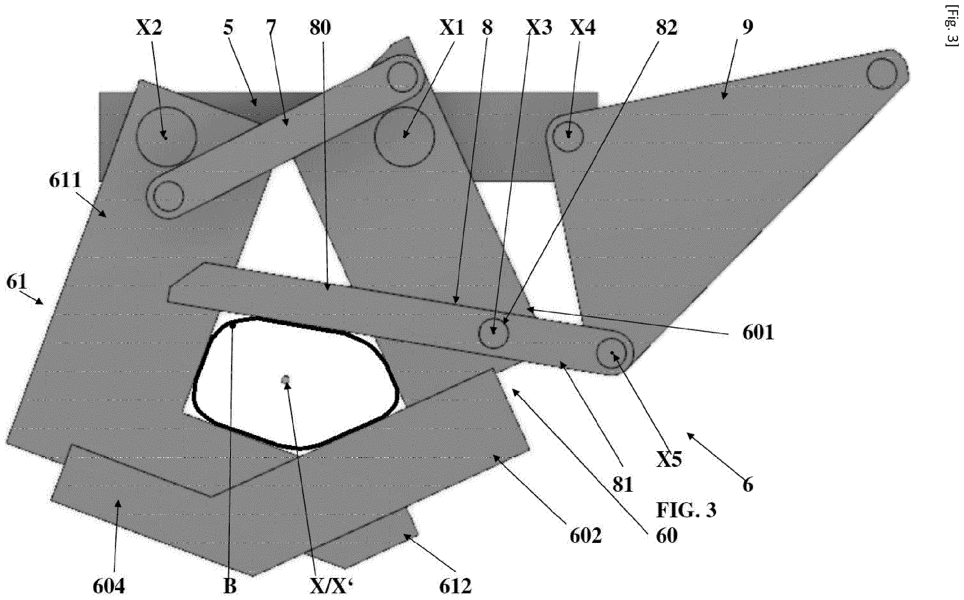

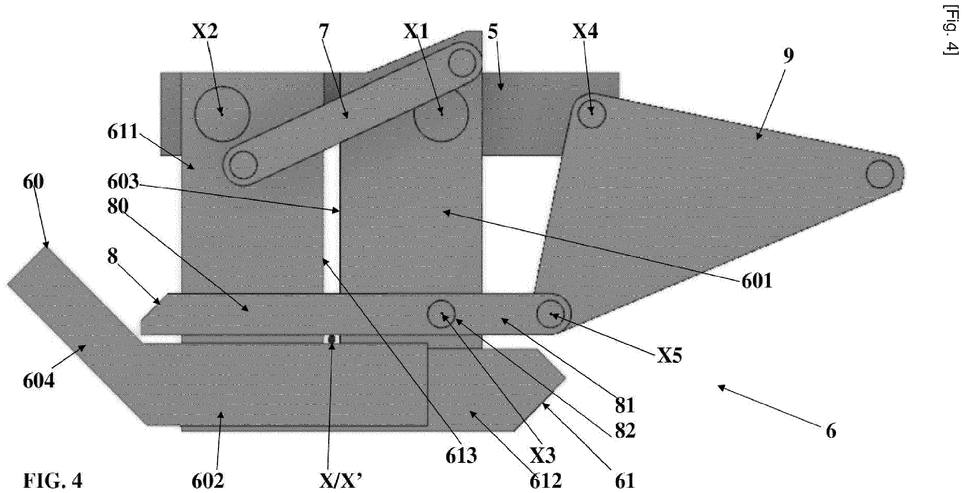

Un tel système d'étranglement 6 adopte au moins une position inactive d'étranglement du boyau B (figure 2) et une position active d'étranglement du boyau B (figure 4) ainsi qu'une pluralité de positions intermédiaires (figures 3 et 5) entre cette position inactive et cette position active d'étranglement.

Selon une autre caractéristique, ledit au moins un système d'étranglement 6 comporte au moins, d'une part, un premier bras d'étranglement 60, qui est monté en rotation sur le support fixe 5 et autour d'un axe X1 parallèle à l'axe X selon lequel s'étend le moyen de stockage 2, et qui est mobile (plus particulièrement en rotation autour dudit axe X1) entre la position inactive d'étranglement du boyau B (figure 2) et la position active d'étranglement du boyau B (figure 4). Ce premier bras d'étranglement 60 comporte, en particulier, un premier berceau 600 pour la réception de la partie de boyau B à étrangler.

D'autre part, ledit au moins un système d'étranglement 6 comporte un deuxième bras d'étranglement 61, qui est monté en rotation sur le support fixe 5 et autour d'un axe X2 parallèle à l'axe X selon lequel s'étend le moyen de stockage 2, qui est mobile (plus particulièrement en rotation autour dudit axe X2) entre la position inactive d'étranglement du boyau B (figure 2) et la position active d'étranglement du boyau B (figure 4). Ce deuxième bras d'étranglement 61 comporte, en particulier, un deuxième berceau 610 pour la réception de la partie de boyau B à étrangler.

Là encore, lorsque le dispositif 1 comporte plusieurs systèmes d'étranglement 6, chacun de ces systèmes d'étranglement 6 comporte, alors, au moins un tel premier bras d'étranglement 60 et un tel deuxième bras d'étranglement 61.

Un tel premier bras d'étranglement 60 comporte au moins, d'une part, une première portion 601 qui est montée en rotation sur le support fixe 5 (plus particulièrement autour de l'axe X1) et, d'autre part, une deuxième portion 602 qui s'étend dans le prolongement et à partir de la première portion 601 d'un tel premier bras d'étranglement 60 (plus particulièrement fixement par rapport à cette première portion 601), ceci en formant un angle compris entre 50° et 170°, de préférence compris entre 70° et 120°, notamment de l'ordre de 90° (le premier bras d'étranglement 60 adoptant alors la forme d'une équerre), avec cette première portion 601.

De manière alternative ou (et de préférence) additionnelle, un tel deuxième bras d'étranglement 61 comporte au moins, d'une part, une première portion 611 qui est montée en rotation sur le support fixe 5 (plus particulièrement autour de l'axe X2) et, d'autre part, une deuxième portion 612 qui s'étend dans le prolongement et à partir de la première portion 611 d'un tel deuxième bras d'étranglement 61 (plus particulièrement fixement par rapport à la première portion 611), ceci en formant un angle compris entre 50° et 170°, de préférence compris entre 70° et 120°, notamment de l'ordre de 90° (le deuxième bras d'étranglement 61 adoptant alors la forme d'une équerre) avec cette première portion 611.

Selon une autre caractéristique, la première portion 601 du premier bras d'étranglement 60 et la première portion 611 du deuxième bras d'étranglement 61 s'étendent dans un même plan qui est perpendiculaire à l'axe X selon lequel s'étend le moyen de stockage 2.

De manière additionnelle, la deuxième portion 612 du deuxième bras d'étranglement 61 peut, également, s'étendre dans le plan dans lequel s'étendent la première portion 601 du premier bras d'étranglement 60 et la première portion 611 de ce deuxième bras d'étranglement 61.

Dans un pareil cas, la deuxième portion 602 du premier bras d'étranglement 60 s'étend, alors, dans au moins un plan décalé latéralement par rapport et parallèle au plan dans lequel s'étendent la première portion 601 de ce premier bras d'étranglement 60 et/ou le deuxième bras d'étranglement 61 (plus particulièrement la première portion 611 et la deuxième portion 612 de ce deuxième bras d'étranglement 61).

Selon une caractéristique particulière, la deuxième portion 602 du premier bras d'étranglement 60 peut comporter deux lames parallèles, qui sont positionnées de part et d'autre de la première portion 601 de ce premier bras d'étranglement 60, et qui sont solidaires fixement de cette première portion 601 de ce premier bras d'étranglement 60. Ces deux lames parallèles viennent, alors, se positionner de part et d'autre du deuxième bras d'étranglement 61 (plus particulièrement de part et d'autre de la deuxième portion 612 de ce deuxième bras d'étranglement 61), ceci au moins en position active d'étranglement, voire en position intermédiaire d'étranglement (figure 5).

Selon une caractéristique additionnelle, la première portion 601 du premier bras d'étranglement 60 présente un premier bord longitudinal 603 et la première portion 611 du deuxième bras d'étranglement 61 présente un deuxième bord longitudinal 613. En position active d'étranglement du boyau B (figure 4) ce premier bord longitudinal 603 et ce deuxième bord longitudinal 613 sont parallèles.

Tel que visible sur les figures en annexe, ledit premier bras d'étranglement 60 peut, encore, comporter une troisième portion 604 qui s'étend (fixement) dans le prolongement et à partir de la deuxième portion 602 de ce premier bras d'étranglement 60, ceci en formant un angle compris 120° et 150°, de préférence de l'ordre de 135° avec cette deuxième portion 602 de ce premier bras d'étranglement 60.

Cependant et de manière alternative, c'est ledit deuxième bras d'étranglement 61 qui peut comporter une troisième portion qui s'étend (fixement) dans le prolongement et à partir de la deuxième portion 612 de ce deuxième bras d'étranglement 61, ceci en formant un angle compris 120° et 150°, de préférence de l'ordre de 135° avec cette deuxième portion 612 de ce deuxième bras d'étranglement 61 (solution non représentée).

Tel que mentionné ci-dessus, le premier bras d'étranglement 60 comporte un premier berceau 600 de réception de la partie de boyau B à étrangler tandis que le deuxième bras d'étranglement 61 comporte un deuxième berceau 610 de réception de la partie de boyau B à étrangler.

A ce propos, on observera que c'est, plus particulièrement, la première portion 601 et/ou la deuxième portion 602 (voire encore la troisième portion 604) du premier bras d'étranglement 60 qui comporte, alors ce premier berceau 600. Parallèlement, c'est, plus particulièrement, la première portion 611 et/ou la deuxième portion 612 du deuxième bras d'étranglement 61 qui comporte, alors ce deuxième berceau 610.

Une autre caractéristique du dispositif 1 concerne le fait qu'il comporte des moyens d'entraînement 7 (plus particulièrement en rotation selon l'axe X2) du deuxième bras d'étranglement 61 (plus particulièrement de la première portion 611 de ce deuxième bras d'étranglement 61) par le premier bras d'étranglement 60 (plus particulièrement par la première portion 601 de ce premier bras d'étranglement 60).

Cependant et de manière alternative (mais non représentée), ledit dispositif 1 peut comporter des moyens d'entraînement 7 (plus particulièrement en rotation selon l'axe X1) du premier bras d'étranglement 60 (plus particulièrement de la première portion 601 de ce premier bras d'étranglement 60) par le deuxième bras d'étranglement 61 (plus particulièrement par la première portion 611 de ce deuxième bras d'étranglement 60).

A ce propos, on observera que c'est, plus particulièrement, ledit au moins un système d'étranglement 6 qui comporte de tels moyens d'entraînement 7 et/ou que ces moyens d'entraînement 7 peuvent adopter la forme d'une bielle ou analogue qui raccorde les deux bras d'étranglement (60 ; 61), plus particulièrement les premières portions (601 ;611) de ces bras d'étranglement (60 ; 61).

Une autre caractéristique du dispositif 1 concerne le fait que ledit au moins un système d'étranglement 6 comporte, encore et chacun, un levier d'étranglement 8, qui est mobile en rotation autour d'un axe X3 parallèle à l'axe X selon lequel s'étend le moyen de stockage 2, ceci entre une position inactive d'étranglement du boyau B (figure 2) et une position active d'étranglement du boyau B (figure 4).

En fait, un tel levier d'étranglement 8 est, plus particulièrement, monté en rotation autour dudit axe X3, ceci sur le premier bras d'étranglement 60, notamment sur la première portion 601 de ce premier bras d'étranglement 60.

Cependant et de manière alternative (mais non représentée), un tel levier d'étranglement 8 peut être monté en rotation autour dudit axe X3, ceci sur le deuxième bras d'étranglement 61, notamment sur la première portion 611 de ce deuxième bras d'étranglement 61.

Encore une autre caractéristique concerne le fait que le dispositif 1 comporte, encore, des moyens d'actionnement 9 qui sont configurés pour actionner ledit au moins un système d'étranglement 6.

Ces moyens d'actionnement 9 sont configurés pour entraîner le premier bras d'étranglement 60 (plus particulièrement en rotation autour de l'axe X1) et/ou le deuxième bras d'étranglement 61 (plus particulièrement en rotation autour de l'axe X2) et/ou le levier d'étranglement 8 (plus particulièrement en rotation autour de l'axe X3 et/ou en translation).

En fait, ces moyens d'actionnement 9 sont, plus particulièrement, configurés pour entraîner directement le levier d'étranglement 8 (plus particulièrement en rotation autour de l'axe X3 et en translation) et indirectement le premier bras d'étranglement 60 (plus particulièrement en rotation autour de l'axe X1 et par l'intermédiaire dudit levier d'étranglement 8 qui est monté en rotation sur ce premier bras d'étranglement 60 autour de l'axe X3) ainsi que le deuxième bras d'étranglement 61 (plus particulièrement en rotation autour de l'axe X2 et par l'intermédiaire des moyens d'entraînement 7).

Ces moyens d'actionnement 9 sont montés en rotation, d'une part, sur le support fixe 5, ceci autour d'un axe X4 parallèle à l'axe X selon lequel s'étend le moyen de stockage 2 et, d'autre part, sur le levier d'étranglement 8 (qui est lui-même monté en rotation sur le premier bras d'étranglement 60 tel que susmentionné), ceci autour d'un autre axe X5 parallèle à l'axe X selon lequel s'étend le moyen de stockage.

Une autre caractéristique concerne le fait que le levier d'étranglement 8 comporte, d'une part, une portion d'étranglement 80 qui est configurée pour étrangler le boyau B (plus particulièrement en position active d'étranglement), d'autre part, une portion de raccordement 81 qui est configurée pour raccorder ce levier d'étranglement 8 aux moyens d'actionnement 9 (plus particulièrement pour le montage de ces moyens d'actionnement 9 en rotation sur ce levier d'étranglement 8 autour de l'axe X5) et, d'autre part encore, des moyens de montage en rotation 82 de ce levier d'étranglement 8 sur le premier bras d'étranglement 60, ces moyens de montage en rotation 82 étant interposés entre la portion d'étranglement 80 et la portion de raccordement 81.

Cependant et selon un autre mode de réalisation non représenté, ces moyens d'actionnement 9 peuvent, encore, être configurés pour entraîner, d'une part, directement le premier bras d'étranglement 60 (plus particulièrement en rotation autour de l'axe X1), respectivement le deuxième bras d'étranglement 61 (plus particulièrement en rotation autour de l'axe X2) et, d'autre part, indirectement le deuxième bras d'étranglement 61 (plus particulièrement en rotation autour de l'axe X2 et par l'intermédiaire des moyens d'entraînement 7), respectivement le premier bras d'étranglement 60 (plus particulièrement en rotation autour de l'axe X1 et par l'intermédiaire des moyens d'entraînement 7).

Cet autre mode de réalisation peut, alors, comporter un levier d'étranglement 8 (qui présente les caractéristiques décrites ci-dessus) qui, d'une part, est monté en rotation autour de l'axe X3 sur le premier bras d'étranglement 60 (ceci tel que décrit ci-dessus) et, d'autre part, est raccordé au support fixe 5 par l'intermédiaire d'un moyen de raccordement. Un tel moyen de raccordement peut adopter la forme d'une bielle ou analogue qui est montée en rotation, d'une part, sur le support fixe 5 autour de l'axe X4 et, d'autre part, sur le levier d'étranglement 8 (plus particulièrement sur la portion de raccordement 81 de ce lever d'étranglement 8) autour de l'axe X5.

On observera que lesdits moyens d'actionnement 9 peuvent être commandés de manière manuelle et/ou motorisée, notamment de manière automatique.

Aussi et selon un mode de réalisation particulier, ces moyens d'actionnement 9 peuvent comporter une poignée de préhension (non représentée), ceci pour un actionnement manuel de ces moyens d'actionnement 9.

De manière alternative, ces moyens d'actionnement 9 peuvent comporter des moyens motorisés. Ces moyens motorisés peuvent, alors, comporter un moteur électrique ou un vérin, notamment hydraulique, pneumatique ou électrique.

Encore une autre caractéristique concerne le fait que le premier bras d'étranglement 60 et le deuxième bras d'étranglement 61 comportent des moyens de guidage 10 d'au moins un clip de sertissage (non représenté), ceci en direction de l'axe X' autour duquel le boyau B est étranglé par ledit au moins un système d'étranglement 6. Ces moyens de guidage 10 sont configurés pour guider un tel clip de sertissage, ceci en vue de son positionnement autour de la portion étranglée de boyau B (position active d'étranglement du premier et du deuxième bras d'étranglement 60, 61, voire du levier d'étranglement 8) préalablement à son sertissage sur cette portion étranglée de boyau B.

A ce propos, on observera que c'est, plus particulièrement, la première portion 601 de ce premier bras d'étranglement 60 et la première portion 611 de ce deuxième bras d'étranglement 61 qui comportent ces moyens de guidage 10.

La première portion 601 de ce premier bras d'étranglement 60 et la première portion 611 de ce deuxième bras d'étranglement 61, d'une part, présentent une forme rectiligne et, d'autre part, sont parallèles en position active d'étranglement du boyau B et en position de sertissage d'un clip de sertissage, ce qui facilite le guidage d'un tel clip de sertissage par les moyens de guidage 10.

En fait, ces moyens de guidage 10 peuvent adopter la forme d'une rainure de guidage que comporte, d'une part, le premier bras d'étranglement 60 et, d'autre part, le deuxième bras d'étranglement 61.

De manière particulière, ces moyens de guidage 10 peuvent adopter la forme d'une rainure de guidage que comporte, d'une part, la première portion 601 du premier bras d'étranglement 60 et, d'autre part, la première portion 611 du deuxième bras d'étranglement 61.

Plus particulièrement, ces moyens de guidage 10 peuvent adopter la forme d'une rainure de guidage que comporte, d'une part, le premier bord longitudinal 603 que comporte cette première portion 601 de ce premier bras d'étranglement 60 et, d'autre part, le deuxième bord longitudinal 613 que comporte cette première portion 611 de ce deuxième bras d'étranglement 61.

De tels moyens de guidage 10 permettent, avantageusement, d'utiliser des clips de sertissage qui adoptent la forme d'un cavalier comportant, d'une part, une première branche qui est guidée dans la rainure de guidage que comporte le premier bras d'étranglement 60 (plus particulièrement que comporte la première portion 601 de ce premier bras d'étranglement 60), d'autre part, une deuxième branche qui est guidée dans la rainure de guidage que comporte le deuxième bras d'étranglement 61 (plus particulièrement que comporte la première portion 611 de ce deuxième bras d'étranglement 61) et, d'autre part encore, une portion de raccordement, qui raccorde la première et la deuxième branche de ce cavalier, et qui est positionnée entre les deux rainures de guidage. Un tel clip de sertissage adopte une forme en « U ».

La possibilité d'utiliser de tels clips de sertissage permet, avantageusement, d'une part, de recourir à des clips de sertissage de conception simple, peu onéreux, faciles à mettre en oeuvre et individualisés (notamment regroupés au sein d'un jeu de clips qui adopte la forme d'une barrette de clips juxtaposés) et, d'autre part, de rendre le dispositif conforme à l'invention plus polyvalent (en permettant un sertissage de ces clips sur des boyaux naturels et artificiels) et de diminuer substantiellement le coût de revient du dispositif conforme à l'invention, ceci par rapport à des dispositifs de l'état de la technique qui ont recours à des clips de sertissage, d'une part, qui sont agencés au sein d'un fil continu et, d'autre part, qui nécessitent un système spécifique, additionnel et onéreux de découpage d'un tel clip dans un tel fil de clips et dont l'utilisation est limitée à un sertissage de clips sur des boyaux artificiels (moins fragiles que les boyaux naturels).

Le dispositif 1 comporte, également, des moyens de sertissage (non représentés) pour sertir au moins un clip de sertissage (non représenté) sur une portion étranglée de boyau B.

Ces moyens de sertissage comportent, d'une part, au moins une tringle de sertissage qui est mobile entre le premier bras d'étranglement 60 et le deuxième bras d'étranglement 61 (plus particulièrement entre la première portion 601 de ce premier bras d'étranglement 60 et la première portion 611 de ce deuxième bras d'étranglement 61) et, d'autre part, au moins une matrice de sertissage que comporte au moins l'un des bras d'étranglement (60 ; 61), plus particulièrement que comporte la deuxième portion 612 du deuxième bras d'étranglement 61.

Le dispositif 1 comporte, également, des moyens de stockage 11 d'une pluralité de clips de sertissage (plus particulièrement deux moyens de stockage 11, chacun pour le stockage d'un jeu de clips de sertissage, notamment sous la forme d'une barrette de clips de sertissage juxtaposés) ainsi que des moyens d'acheminement 12 de ces clips de sertissage (à partir desdits moyens de stockage 11) en direction des moyens de guidage 10 de ces clips de sertissage.

Le dispositif 1 comporte, encore, des moyens de découpe (non représentés) pour découper le boyau B, ceci après sertissage d'au moins un clip de sertissage sur ce boyau B, plus particulièrement sur au moins une portion étranglée de ce boyau B.

En fait, ces moyens de découpe sont, plus particulièrement, configurés pour découper une portion de boyau B qui est située entre deux portions de boyau B qui ont été étranglées par deux systèmes d'étranglement 6 que comporte le dispositif 1 et après sertissage de deux clips de sertissage chacune sur une de ces portions étranglées du boyau B, ceci entre ces deux clips de sertissage.

Le dispositif 1 comporte aussi des moyens d'évacuation 13 pour évacuer les saucisses, ceci après découpe du boyau B.

Finalement, le dispositif 1 comporte, aussi, des moyens de commande 14 de ce dispositif 1.

## Revendications

1. Dispositif pour la fabrication de saucisses (1) qui comportent un boyau (B) contenant un produit alimentaire (P) et refermé à ses deux extrémités, le dispositif (1) comporte :
- un support fixe (5)
- un moyen de stockage (2) d'un boyau (B) dans l'attente de son remplissage par le produit alimentaire (P), ce moyen de stockage (2) s'étendant selon un axe (X) et présentant une portion d'extrémité (20) qui délimite un volume d'extrémité (21) ;
- un moyen d'acheminement (3) du produit alimentaire (P) en vue du remplissage du boyau (B) avec ce produit alimentaire (P) ;
- au moins un système d'étranglement (6) d'une partie du boyau (B) remplie de produit alimentaire (P), ledit au moins un système d'étranglement (6) étant configuré pour étrangler le boyau (B) autour d'un axe (X') qui, d'une part, est au moins parallèle à l'axe (X) selon lequel s'étend le moyen de stockage (2) du boyau (B) et, d'autre part, traverse le volume d'extrémité (21), ledit au moins un système d'étranglement (6) comportant au moins, d'une part, un premier bras d'étranglement (60), qui est monté en rotation sur le support fixe (5) et autour d'un axe (X1) parallèle à l'axe (X) selon lequel s'étend le moyen de stockage (2), qui est mobile entre une position inactive d'étranglement du boyau (B) et une position active d'étranglement du boyau (B), et qui comporte un premier berceau (600) pour la réception de la partie de boyau (B) à étrangler, d'autre part, un deuxième bras d'étranglement (61), qui est monté en rotation sur le support fixe (5) et autour d'un axe (X2) parallèle à l'axe (X) selon lequel s'étend le moyen de stockage (2), qui est mobile entre une position inactive d'étranglement du boyau (B) et une position active d'étranglement du boyau (B), et qui comporte un deuxième berceau (610) pour la réception de la partie de boyau (B) à étrangler ;
- et est **caractérisé par le fait que** le premier bras d'étranglement (60) et le deuxième bras d'étranglement (61) comportent des moyens de guidage (10) d'au moins un clip de sertissage, ceci en direction de l'axe (X') autour duquel le boyau (B) est étranglé par ledit au moins un système d'étranglement (6).

2. Dispositif (1) selon la revendication 1, **caractérisé par le fait qu'**il comporte un tube (4), d'une part, que comporte le moyen de stockage (2) d'un boyau (B) et autour duquel est positionné le boyau (B) et, d'autre part, que comporte le moyen d'acheminement (3) du produit alimentaire (P) et à l'intérieur duquel est acheminé le produit alimentaire (P), et d'autre part encore, qui s'étend selon un axe au moins parallèle à l'axe (X) selon lequel s'étend le moyen de stockage (2).

3. Dispositif selon l'une quelconque des revendications précédentes, **caractérisé par le fait que** le premier bras d'étranglement (60) et/ou le deuxième bras d'étranglement (61) comportent au moins, d'une part, une première portion (601 ; 611) qui est montée en rotation sur le support fixe (5) et, d'autre part, une deuxième portion (602 ; 612) qui s'étend dans le prolongement et à partir de la première portion (601 ; 611) d'un tel bras d'étranglement (60 ; 61), ceci en formant un angle compris entre 50° et 170°, de préférence compris entre 70° et 120°, notamment de l'ordre de 90° avec cette première portion (601 ; 611).

4. Dispositif (1) selon la revendication 3, **caractérisé par le fait que** la première portion (601) du premier bras d'étranglement (60) présente un premier bord longitudinal (603) tandis que la première portion (611) du deuxième bras d'étranglement (61) présente un deuxième bord longitudinal (613) qui est parallèle au premier bord longitudinal (603), ceci en position active d'étranglement du boyau (B).

5. Dispositif (1) selon l'une quelconque des revendications précédentes, **caractérisé par le fait qu'**il comporte des moyens d'entraînement (7), soit du deuxième bras d'étranglement (61) par le premier bras d'étranglement (60), soit du premier bras d'étranglement (60) par le deuxième bras d'étranglement (61).

6. Dispositif (1) selon l'une quelconque des revendications précédentes, **caractérisé par le fait que** ledit au moins un système d'étranglement (6) comporte, encore, un levier d'étranglement (8), qui est mobile en rotation autour d'un axe (X3) parallèle à l'axe (X) selon lequel s'étend le moyen de stockage (2), ceci entre une position inactive d'étranglement du boyau (B) et une position active d'étranglement du boyau (B).

7. Dispositif (1) selon la revendication 6, **caractérisé par le fait que** le levier d'étranglement (8) est monté en rotation autour dudit axe (X3), ceci sur le premier bras d'étranglement (60) ou sur le deuxième bras d'étranglement (61).

8. Dispositif (1) selon la revendication 1 ou 6, **caractérisé par le fait qu'**il comporte, encore, des moyens d'actionnement (9) pour actionner ledit au moins un système d'étranglement (6), ces moyens d'actionnement (9) étant configurés pour entraîner le premier bras d'étranglement (60) ou le deuxième bras d'étranglement (61) ou le levier d'étranglement (8).

9. Dispositif (1) selon les revendications 6 et 8, **caractérisé par le fait que** le levier d'étranglement (8) est monté en rotation autour de l'axe (X3) sur le premier bras d'étranglement (60) tandis que les moyens d'actionnement (9) sont montés en rotation, d'une part, sur le support fixe (5), ceci autour d'un axe (X4) parallèle à l'axe (X) selon lequel s'étend le moyen de stockage (2) et, d'autre part, sur le levier d'étranglement (8), ceci autour d'un autre axe (X5) parallèle à l'axe (X) selon lequel s'étend le moyen de stockage (2).

10. Dispositif (1) selon les revendications 6 et 8, **caractérisé par le fait que** le levier d'étranglement (8) comporte, d'une part, une portion d'étranglement (80) qui est configurée pour étrangler le boyau (B), d'autre part, une portion de raccordement (81) qui est configurée pour raccorder ce levier d'étranglement (8) aux moyens d'actionnement (9) et, d'autre part encore, des moyens de montage en rotation (82) de ce levier d'étranglement (8) sur le premier bras d'étranglement (60), ces moyens de montage en rotation (82) étant interposés entre la portion d'étranglement (80) et la portion de raccordement (81).

11. Dispositif (1) selon les revendications 6 et 8, **caractérisé par le fait que** les moyens d'actionnement (9) sont configurés pour entraîner le premier bras d'étranglement (60) ou le deuxième bras d'étranglement (61) tandis que le levier d'étranglement (8), d'une part, est monté en rotation autour de l'axe (X3) sur le premier bras d'étranglement (60) et, d'autre part, est raccordé au support fixe (5) par l'intermédiaire d'un moyen de raccordement.

12. Dispositif (1) selon l'une quelconque des revendications précédentes, **caractérisé par le fait que** les moyens de guidage (10) adoptent la forme d'une rainure de guidage que comporte, d'une part, le premier bras d'étranglement (60) et, d'autre part, le deuxième bras d'étranglement (61).

13. Dispositif (1) selon la revendication 3, **caractérisé par le fait que** les moyens de guidage (10) adoptent la forme d'une rainure de guidage que comporte, d'une part, la première portion (601) que comporte le premier bras d'étranglement (60) et, d'autre part, la première portion (611) que comporte le deuxième bras d'étranglement (61).

14. Dispositif (1) selon la revendication 4, **caractérisé par le fait que** les moyens de guidage (10) adoptent la forme d'une rainure de guidage que comporte, d'une part, le premier bord longitudinal (603) de la première portion (601) du premier bras d'étranglement (60) et, d'autre part, le deuxième bord longitudinal (613) de la première portion (611) du deuxième bras d'étranglement (61).

## Patentansprüche

1. Vorrichtung zur Herstellung von Würstchen (1), die einen Darm (B) umfassen, der ein Lebensmittelprodukt (P) enthält und an seinen beiden Enden verschlossen ist, wobei die Vorrichtung (1) umfasst:
- einen festen Träger (5)
- ein Speichermittel (2) aus einem Darm (B), das auf seine Befüllung mit dem Lebensmittelprodukt (P) wartet, wobei dieses Speichermittel (2) sich entlang einer Achse (X) erstreckt und ein Endabschnitt (20) aufweist, das ein Endvolumen begrenzt (21);
- ein Fördermittel (3) des Lebensmittelprodukts (P), um den Darm (B) mit diesem Lebensmittelprodukt (P) zu füllen;
- mindestens ein Drosselsystem (6) eines mit Lebensmittelprodukt (P) gefüllten Teils des Darms (B), wobei das mindestens eine Drosselsystem (6) so konfiguriert ist, dass es den Darm (B) um eine Achse (X') drosselt, die einerseits zumindest parallel zur Achse (X) verläuft, entlang derer sich das Speichermittel (2) des Darms (B) erstreckt, und andererseits das Endvolumen (21) kreuzt, wobei das mindestens eine Drosselsystem (6) mindestens einerseits einen ersten Drosselarm (60) umfasst, der drehbar am festen Träger (5) und um eine zur Achse (X) parallelen Achse (X1) gelagert ist, entlang derer sich das Speichermittel (2) erstreckt, das zwischen einer inaktiven Drosselposition des Darms (B) und einer aktiven Drosselposition des Darms (B) bewegbar ist und das eine erste Mulde (600) zum Aufnehmen des zu drosselnden Teils des Darms (B) umfasst, und andererseits einen zweiten Drosselarm (61), der drehbar am festen Träger (5) und um eine Achse (X2) parallel zur Achse (X) gelagert ist, entlang derer sich das Speichermittel (2) erstreckt, das zwischen einer inaktiven Drosselposition des Darms (B) und einer aktiven Drosselposition des Darms (B) bewegbar ist und das eine zweite Mulde (610) zum Aufnehmen des zu drosselnden Teils des Darms umfasst (B);
- und **dadurch gekennzeichnet, dass** der erste Drosselarm (60) und der zweite Drosselarm (61) Führungsmittel (10) von mindestens einem Klemmclip, umfassen, und zwar in Richtung der Achse (X'), um die der Darm (B) durch das mindestens ein Drosselsystem (6) gedrosselt wird.

2. Vorrichtung (1) nach Anspruch 1, **dadurch gekennzeichnet, dass** sie einen Schlauch (4) umfasst, den einerseits das Speichermittel (2) eines Darms (B) umfasst und um den herum der Darm ( B) positioniert ist und den andererseits das Fördermittel (3) des Lebensmittelprodukts (P) umfasst und in dessen Inneren das Lebensmittelprodukt (P) gefördert wird, und andererseits wiederum, der sich entlang einer Achse erstreckt, die mindestens parallel zur Achse (X) verläuft, entlang derer sich das Speichermittel (2) erstreckt.

3. Vorrichtung nach einem der vorstehenden Ansprüche,
**dadurch gekennzeichnet, dass** der erste Drosselarm (60) und/oder der zweite Drosselarm (61) mindestens einerseits einen ersten Abschnitt (601; 611) umfassen, der am festen Träger (5) drehbar gelagert ist, und andererseits einen zweiten Abschnitt (602; 612), der sich in Verlängerung und vom ersten Abschnitt (601; 611) eines solchen Drosselarms (60; 61) ausgehend erstreckt, und zwar durch Bildung eines Winkels zwischen 50° und 170°, vorzugsweise zwischen 70° und 120°, insbesondere in der Größenordnung von 90° mit diesem ersten Abschnitt (601; 611).

4. Vorrichtung (1) nach Anspruch 3, **dadurch gekennzeichnet, dass** der erste Abschnitt (601) des ersten Drosselarms (60) eine erste Längskante (603) aufweist, während der erste Abschnitt (611) des zweiten Drosselarms (61) eine zweite Längskante (613) aufweist, die parallel zur ersten Längskante (603) verläuft, und zwar in der aktiven Drosselposition des Darms (B).

5. Vorrichtung (1) nach einem der vorstehenden Ansprüche,
**dadurch gekennzeichnet, dass** sie Antriebsmittel (7) umfasst, die entweder vom zweiten Drosselarm (61) durch den ersten Drosselarm (60) oder vom ersten Drosselarm (60) durch den zweiten Drosselarm (61) stammen.

6. Vorrichtung (1) nach einem der vorstehenden Ansprüche,
**dadurch gekennzeichnet, dass** das mindestens eine Drosselsystem (6) außerdem einen Drosselhebel (8) umfasst, der um eine zur Achse (X) parallelen Achse (X3) drehbar beweglich ist, entlang derer sich das Speichermittel (2) erstreckt, und zwar zwischen einer inaktiven Drosselposition des Darms (B) und einer aktiven Drosselposition des Darms (B).

7. Vorrichtung (1) nach Anspruch 6, **dadurch gekennzeichnet, dass** der Drosselhebel (8) um die Achse (X3) drehbar gelagert ist, und zwar am ersten Drosselarm (60) oder am zweiten Drosselarm (61).

8. Vorrichtung (1) nach Anspruch 1 oder 6, **dadurch gekennzeichnet, dass** sie außerdem Betätigungsmittel (9) zum Betätigen des mindestens einen Drosselsystems (6) umfasst, wobei diese Betätigungsmittel (9) so konfiguriert sind, dass sie den ersten Drosselarm (60) oder den zweiten Drosselarm (61) oder den Drosselhebel (8) antreiben.

9. Vorrichtung (1) nach den Ansprüchen 6 und 8,
**dadurch gekennzeichnet, dass** der Drosselhebel (8) drehbar um die Achse (X3) am ersten Drosselarm (60) gelagert ist, während die Betätigungsmittel (9) einerseits drehbar am festen Träger (5), und zwar um eine Achse (X4) parallel zur Achse (X), entlang derer sich das Speichermittel (2) erstrecken, und andererseits am Drosselhebel (8) gelagert sind, und zwar um eine weitere Achse (X5) parallel zur Achse (X), entlang derer sich das Speichermittel (2) erstreckt.

10. Vorrichtung (1) nach den Ansprüchen 6 und 8,
**dadurch gekennzeichnet, dass** der Drosselhebel (8) einerseits einen Drosselabschnitt (80) umfasst, der dazu konfiguriert ist, den Darm (B) zu drosseln, andererseits einen Verbindungsabschnitt (81), der dazu konfiguriert ist, diesen Drosselhebel (8) mit den Betätigungsmitteln (9) zu verbinden, und andererseits wiederum Drehmontagemittel (82) dieses Drosselhebels (8) am ersten Drosselarm (60), wobei diese Drehmontagemittel (82) zwischen dem Drosselabschnitt (80) und dem Verbindungsabschnitt (81) angeordnet sind.

11. Vorrichtung (1) nach den Ansprüchen 6 und 8,
**dadurch gekennzeichnet, dass** die Betätigungsmittel (9) so konfiguriert sind, dass sie den ersten Drosselarm (60) oder den zweiten Drosselarm (61) antreiben, während der erste Drosselhebel (8) einerseits drehbar um die Achse (X3) am ersten Drosselarm (60) gelagert und andererseits über ein Verbindungsmittel mit dem festen Träger (5) verbunden ist.

12. Vorrichtung (1) nach einem der vorstehenden Ansprüche,
**dadurch gekennzeichnet, dass** die Führungsmittel (10) die Form einer Führungsnut annehmen, die einerseits den ersten Drosselarm (60) und andererseits den zweiten Drosselarm (61) umfassen.

13. Vorrichtung (1) nach Anspruch 3, **dadurch gekennzeichnet, dass** die Führungsmittel (10) die Form einer Führungsnut annehmen, die einerseits den ersten Abschnitt (601), der den ersten Drosselarm umfasst ( 60) und andererseits den ersten Abschnitt (611) umfasst, der den zweiten Drosselarm (61) umfasst.

14. Vorrichtung (1) nach Anspruch 4, **dadurch gekennzeichnet, dass** die Führungsmittel (10) die Form einer Führungsnut annehmen, die einerseits die erste Längskante (603) des ersten Abschnitts (601) des ersten Drosselarms (60) und andererseits die zweite Längskante (613) des ersten Abschnitts (611) des zweiten Drosselarms (61) umfasst.

## Claims

1. Device (1) for making sausages which comprise a casing (B) containing a food product (P), which casing is closed at the two ends thereof, the device (1) comprising:
- a fixed bracket (5)
- means (2) for storing a casing (B) while waiting for it to be filled with the food product (P), the storage means (2) extending along an axis (X) and having an end portion (20) which delimits an end space (21);
- means (3) for conveying the food product (P) in order to fill the casing (B) with the food product (P);
- at least one constriction system (6) for constricting a portion of the casing (B) which is filled with food product (P), said at least one constriction system (6) being configured to constrict the casing (B) about an axis (X') which is at least parallel to the axis (X) along which the storage means (2) for the casing (B) extends, and which passes through the end space (21), said at least one constriction system (6) comprising at least a first constriction arm (60), which is rotatably mounted on the fixed bracket (5) about an axis (X1) which is parallel to the axis (X) along which the storage means (2) extends, which is movable between an inactive casing (B) constriction position and an active casing (B) constriction position, and which comprises a first cradle (600) for receiving the portion of casing (B) to be constricted, and said system comprising a second constriction arm (61), which is rotatably mounted on the fixed bracket (5) about an axis (X2) which is parallel to the axis (X) along which the storage means (2) extends, which is movable between an inactive casing (B) constriction position and an active casing (B) constriction position, and which comprises a second cradle (610) for receiving the portion of casing (B) to be constricted;
- and is **characterized in that** the first constriction arm (60) and the second constriction arm (61) comprise means (10) for guiding at least one crimping clip along the axis (X') about which the casing (B) is constricted by said at least one constriction system (6).

2. Device (1) according to claim 1, **characterized in that** it comprises a tube (4) which is contained by the means (2) for storing a casing (B) and around which the casing (B) is positioned, which tube is also contained by the means (3) for conveying the food product (P) and inside which the food product (P) is conveyed, and said tube extends along an axis which is at least parallel to the axis (X) along which the storage means (2) extends.

3. Device according to any one of the preceding claims, **characterized in that** the first constriction arm (60) and/or the second constriction arm (61) comprise at least a first portion (601; 611) which is rotatably mounted on the fixed bracket (5) and a second portion (602; 612) which forms an extension that extends from the first portion (601; 611) of one such constriction arm (60; 61), thereby forming an angle of between 50° and 170°, preferably of between 70° and 120°, particularly of around 90° with the first portion (601; 611).

4. Device (1) according to claim 3, **characterized in that** the first portion (601) of the first constriction arm (60) has a first longitudinal edge (603), while the first portion (611) of the second constriction arm (61) has a second longitudinal edge (613) which is parallel to the first longitudinal edge (603) in the active casing (B) constriction position.

5. Device (1) according to any one of the preceding claims,
**characterized in that** it comprises drive means (7) either for driving the second constriction arm (61) by means of the first constriction arm (60), or for driving the first constriction arm (60) by means of the second constriction arm (61).

6. Device (1) according to any one of the preceding claims,
**characterized in that** said at least one constriction system (6) further comprises a constriction lever (8), which is rotatably movable about an axis (X3) which is parallel to the axis (X) along which the storage means (2) extends, between an inactive casing (B) constriction position and an active casing (B) constriction position.

7. Device (1) according to claim 6, **characterized in that** the constriction lever (8) is rotatably mounted about said axis (X3) on the first constriction arm (60) or on the second constriction arm (61).

8. Device (1) according to claim 1 or 6, **characterized in that** it further comprises actuating means (9) for actuating said at least one constriction system (6), the actuating means (9) being configured to drive the first constriction arm (60) or the second constriction arm (61) or the constriction lever (8).

9. Device (1) according to claims 6 and 8, **characterized in that** the constriction lever (8) is rotatably mounted about the axis (X3) on the first constriction arm (60), while the actuating means (9) are rotatably mounted both on the fixed bracket (5) about an axis (X4) which is parallel to the axis (X) along which the storage means (2) extends and on the constriction lever (8) about another axis (X5) which is parallel to the axis (X) along which the storage means (2) extends.

10. Device (1) according to claims 6 and 8, **characterized in that** the constriction lever (8) comprises a constriction portion (80) which is configured to constrict the casing (B) and a connection portion (81) which is configured to connect the constriction lever (8) to the actuating means (9), said lever further comprising means (82) for rotatably mounting the constriction lever (8) on the first constriction arm (60), the means (82) for rotatably mounting being positioned between the constriction portion (80) and the connection portion (81).

11. Device (1) according to claims 6 and 8, **characterized in that** the actuating means (9) are configured to drive the first constriction arm (60) or the second constriction arm (61), while the constriction lever (8) is rotatably mounted about the axis (X3) on the first constriction arm (60) and is connected to the fixed bracket (5) by means of a connection means.

12. Device (1) according to any one of the preceding claims,
**characterized in that** the guide means (10) take the form of a guide groove which both the first constriction arm (60) and the second constriction arm (61) comprise.

13. Device (1) according to claim 3, **characterized in that** the guide means (10) take the form of a guide groove which both the first portion (601) of the first constriction arm (60) and the first portion (611) of the second constriction arm (61) comprise.

14. Device (1) according to claim 4, **characterized in that** the guide means (10) take the form of a guide groove which both the first longitudinal edge (603) of the first portion (601) of the first constriction arm (60) and the second longitudinal edge (613) of the first portion (611) of the second constriction arm (61) comprise.
